# EUROPEAN PATENT SPECIFICATION

(11) **EP 1 695 155 B1**
(45) Date of publication and mention of the grant of the patent: **21.08.2013**
(21) Application number: 04795862.4
(22) Date of filing: 20.10.2004
(51) Int. Cl.: G05B 9/02

(54) **SHUT DOWN APPARATUS AND METHOD FOR USE WITH ELECTRO-PNEUMATIC CONTROLLERS**
HERUNTERFAHRVORRICHTUNG UND VERFAHREN ZUR VERWENDUNG MIT ELEKTROPNEUMATISCHEN STEUERUNGEN
APPAREIL D'ARRET ET PROCEDE POUR UTILISER CET APPAREIL AVEC DES REGULATEURS ELECTROPNEUMATIQUES

(30) Priority: 25.11.2003 US 721848
(43) Date of publication of application: 30.08.2006
(73) Proprietor: FISHER CONTROLS INTERNATIONAL LLC, St. Louis, MO 63136 (US)
(72) Inventor: SEBERGER, Steven, G., Marshalltown, IA 50158-9549 (US)
(74) Representative: Bohnenberger, Johannes
(86) International application number: PCT/US2004/034758
(87) International publication number: WO 2005/057301

(56) References cited:
- EP-A- 0 893 749
- EP-A- 0 895 124
- FR-A- 2 619 262
- US-A- 5 651 385

## Description

### FIELD OF THE INVENTION

The present invention relates generally to electro-pneumatic controllers and, more specifically, to a shut down apparatus and method that may be used with electro-pneumatic controllers.

### BACKGROUND

Process control plants or systems typically include numerous valves, pumps, dampers, boilers, as well many other types of well-known process control devices or operators. In modem process control systems most, if not all, of the process control devices or operators are instrumented with electronic monitoring (e.g., temperature sensors, pressure sensors, position sensors, etc.) and electronic control devices (e.g., programmable controllers, analog control circuits, etc.) to coordinate the activities of the process control devices or operators to carry out one or more process control routines.

For purposes of safety, cost efficiency and reliability, many process control devices are pneumatically actuated using well-known diaphragm type or piston type pneumatic actuators. Typically, pneumatic actuators are coupled to process control devices either directly or via one or more mechanical linkages. Additionally, the pneumatic actuators are typically coupled to the overall process control system via an electro-pneumatic controller. Electro-pneumatic controllers are usually configured to receive one or more control signals (e.g., 4-20 milliamps (mA), 0-10 volts direct current (VDC), digital commands, etc.) and to convert these control signals into a pressure provided to the pneumatic actuator to cause a desired operation of the process control device. For example, if a process control routine requires a pneumatically actuated, normally closed stroke-type valve to pass a greater volume of a process fluid, the magnitude of the control signal applied to an electro-pneumatic controller associated with the valve may be increased (e.g., from 10 mA to 15 mA in the case where the electro-pneumatic controller is configured to receive a 4-20 mA control signal). In turn, the output pressure provided by the electro-pneumatic controller to the pneumatic actuator coupled to the valve at least partially increases to stroke the valve toward a full open condition.

In some industrial process control systems such as, for example, oil and gas processing systems, safety is critically important. The leaking or other uncontrolled discharge of potentially toxic or flammable chemicals, gasses and the like presents significant risks for plant personnel and equipment. As a result, many industrial installations utilize safety shutdown systems in addition to the process control systems. These safety systems usually include valves and other control devices that have been configured to provide a shut down mode of operation (e.g., in an emergency situation) in which the process is forced to a known safe control condition. For example, emergency shut down valves, emergency blow down valves, emergency venting valves, emergency isolation valves, critical on/off valves, etc. may be used to provide a desired level of safety within industrial process control plants.

The electro-pneumatic controllers used with many modem pneumatically actuated process control devices are often implemented using relatively complex digital control circuits. For instance, these digital control circuits may be implemented using a microcontroller, or any other type of processor, that executes machine readable instructions, code, firmware, software, etc. to control the operation of the process control device with which it is associated.

Reliance on proper execution of the software and operation of the associated complex digital circuitry to execute safety-related shut down operations is undesirable because safety certification of such software and digital circuitry is relatively expensive and time consuming. Additionally, due to the inherent complexity of software/processor controlled safety operations, the expected failure rate of a process control or safety shutdown device that uses such safety operations may be unacceptably high for many applications.

To provide a suitably reliable shut down operation when using pneumatically actuated process control or safety shutdown devices, some control equipment manufacturers recommend using a redundant instrument such as, for example, a solenoid actuated venting valve connected to the pressure output of the electro-pneumatic controller (i.e., the input of the pneumatic actuator coupled to the process control device). In this manner, when a shutdown of the process control or emergency shutdown device is needed, a shut down signal may be applied (e.g., via the application or removal of power) to the solenoid of the venting valve, thereby venting the pneumatic actuator to atmosphere causing the actuator to drive the emergency shutdown device to a known safe condition (e.g., a zero stroke condition in which the valve is fully closed, fully open, etc.) While the use of redundant safety or failsafe instrumentation such as the above-described venting valve can provide a suitably reliable shut down, the costs associated with such solenoid actuated valves and the costs incurred in field installing (e.g., mounting, wiring, etc.) are relatively high.

Additionally or alternatively, some electro-pneumatic controllers are configured to provide a shut down or failsafe mode of operation in response to a removal of power. This is a relatively reliable approach because the software and complex digital circuitry cannot malfunction to prevent the removal of power to the electro-pneumatic devices within the electro-pneumatic controller. However, reliance on a removal of power to the electro-pneumatic controller to carry out a shut down or failsafe operation may be disadvantageous because once power is removed the electro-pneumatic controller is typically unable to communicate with and to provide operations or other status or control feedback information to the overall process control or emergency shutdown system.
Further information pertaining to the prior art can be found in US patent 5,651,385 which discloses a shut down unit for use with an electro-pneumatic controller, comprising an electronic switch configured to receive a first signal from a control unit of the electro-pneumatic controller and to convey the first signal to an electro-pneumatic transducer of the electro-pneumatic controller, wherein the electronic switch is further configured to receive a second signal associated with a control signal input and to cause the electronic switch to prevent the conveyance of the first signal to the electro-pneumatic transducer.

### BRIEF DESCRIPTION OF THE DRAWINGS

FIG. I is a block diagram of an example electro-pneumatic control system.
FIG. 2 is a detailed block diagram of an example of an electro-pneumatic controller having an integral shut down apparatus that may be used with the system of FIG. 1.
FIGS. 3 and 4 are schematic representations of example circuits that may be used to implement the shut down unit and shut down selector of FIG. 2.
FIG. 5 is an example processor system that may be used to implement the control unit of FIG. 2.

### SUMMARY

The present invention provides a shut down unit in accordance with independent claim 1. Preferred embodiments of the invention are reflected in the dependent claims.

The claimed invention can be better understood in view of the embodiments described in the present disclosure, in particular the present specification and drawings. In general, the present disclosure describes preferred embodiments of the invention. The reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.*

### DETAILED DESCRIPTION

The example electro-pneumatic controller shut down apparatus and method described herein provide a field selectable (e.g., enable/disable) shut down unit that automatically causes the output pressure of the electro-pneumatic controller to go to a failsafe or known safe pressure (e.g., zero pounds per square inch). More specifically, in response to detecting that a control signal (e.g., a set-point signal) provided to the electro-pneumatic controller has exceeded or fallen below a predetermined threshold, the shut down unit may remove or augment an input signal to an electro-pneumatic transducer within the electro-pneumatic controller to cause the output pressure of the electro-pneumatic controller to change, which causes the actuator and the process control or emergency shutdown device (e.g., a valve) coupled to the actuator, to go to a desired shut-down, failsafe, or known safe condition.

In the examples described herein, the electro-pneumatic controller includes a shut down selector that enables the operation of the shut down unit to be enabled or disabled prior to, during or after field installation of the electro-pneumatic controller. In addition, as described in greater detail below, in the case where the shut down unit is enabled to cause a shut down of the electro-pneumatic controller, the shut down unit does not disable the communication functions of the electro-pneumatic controller.
As a result, in contrast to some known devices that require a complete removal of power and, thus, a loss of communication capability, the overall process control or emergency shutdown system can communicate with the example electro-pneumatic controller to confirm that a shut down operation has been successfully completed in response to a shut down command.

Further, the example shut down apparatus and method described herein do not interfere or augment the normal operating functions of the electro-pneumatic controller. For instance, diagnostic activities such as, for example, partial stroke testing of process devices used in safety-related applications are not affected by an enabled shut down unit that has not detected a control signal level requiring a shut down operation. Still further, the example shut down apparatus and method described herein operate independently from the control unit within the electro-pneumatic controller and, thus, eliminate the need to certify the operations or to consider the complex failure mechanisms that are often associated with the control unit electronics. Additionally, the example shut down unit and shut down selector associated with the example shut down apparatus and method described herein are integrated within the electro-pneumatic controller, thereby eliminating the additional costs that are typically associated with having to field install solenoid actuated exhaust valves and the like as described above.

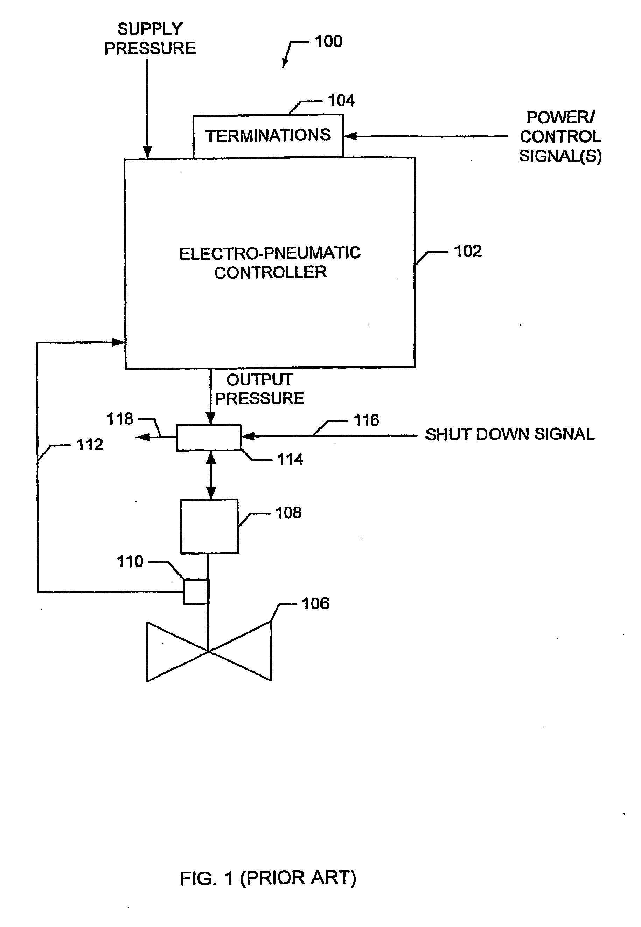

Now turning to FIG. 1, a block diagram of a known example electro-pneumatic control system 100 is shown. The electro-pneumatic control system 100 may be part of a process control or emergency shutdown system (not shown) that implements an industrial processing application, a commercial application, or any other desired application. For example, the system 100 may be part of an industrial process control or emergency shutdown system that processes oil, gas, chemicals or the like. As shown in FIG. 1, the system 100 includes an electro-pneumatic controller 102 that receives power and control signals via connections or terminations 104. In general, the electro-pneumatic controller 102 receives one or more control signals such as, for example, a 4-20 mA signal, a 0-10 VDC signal, and/or digital commands, etc. The control signals may be used by the electro-pneumatic controller 102 as a set point to control its output pressure and/or the operation condition (e.g., the position) of a process control or emergency shutdown device 106 (which is depicted by way of example to be a valve).

In some examples, power and control signals may share one or more lines or wires coupled to the termination 104. For instance, in the case where the control signal is a 4-20 mA signal, the 4-20 mA control signal may also provide power to the electro-pneumatic controller 102. In other examples, the control signal may, for example, be a 0-10 VDC signal and separate power wires or lines (e.g., 24 VDC or 24 volts alternating current (VAC)) may be provided to the electro-pneumatic controller 102. In still other cases, the power and/or control signals may share wires or line with digital data signals. For example, in the case where the control signal is a 4-20 mA signal, a digital data communication protocol such as, for example, the well-known Highway Addressable Remote Transducer (HART) protocol may be used to communicate with the electro-pneumatic controller 102. Such digital communications may be used by the overall process control or emergency shutdown system to which the system 100 is coupled to retrieve identification information, operation status information and the like from the electro-pneumatic controller 102. Alternatively or additionally, the digital communications may be used to control or command the electro-pneumatic transducer 102 to perform one or more control functions.

The terminations 104 may be screw terminals, insulation displacement connectors, pigtail connections, or any other type or combination of suitable electrical connections. Of course, the terminations 104 may be replaced or supplemented with one or more wireless communication links. For example, the electro-pneumatic controller 102 may include one or more wireless transceiver units (not shown) to enable the electro-pneumatic controller 102 to exchange control information (set-point(s), operational status information, etc.) with the overall process control or emergency shutdown system. In the case where one or more wireless transceivers are used by the electro-pneumatic transducer 102, power may be supplied to the electro-pneumatic transducer via, for example, wires to a local or remote power supply.

As is depicted in the example system 100 of FIG. 1, the output pressure of the electro-pneumatic controller 102 is provided to a pneumatic actuator 108 coupled to the process control operator or device 106. Although the process control operator or device 106 is depicted as being a valve, other devices or operators could be used instead (e.g., a damper). The pneumatic actuator 108 may be directly coupled to the device 106 or, alternatively, may be coupled to the device 106 via linkages or the like. For example, in the case where the process control device 106 is a stroke type valve, an output shaft of the pneumatic actuator 108 may be directly coupled to a control shaft of the device 106.

Under normal operating conditions, a position detector or sensor 110 may be used to provide a position feedback signal 112 to the electro-pneumatic controller 102. If provided, the position feedback signal 112 may be used by the electro-pneumatic controller 102 to vary its output pressure to precisely control the position of the process control or emergency shutdown device 106 (e.g., the percentage a valve is open/closed). The position sensor 110 may be implemented using any suitable sensor such as, for example, a hall-effect sensor, a linear voltage displacement transformer, a potentiometer, etc.

As is also shown in the example system 100 of FIG. 1, a shut down or exhaust valve 114 interposes between the output pressure provided by the electro-pneumatic controller 102 and the actuator 108 and, in response to a shut down signal 116, vents the actuator 108 via an exhaust port 118 to atmosphere to cause the actuator 108 to stroke the process control device 106 to a known safe condition. As is known, the exhaust valve 110 may be implemented using a solenoid actuated three-way valve that receives a 24 VDC or 24 VAC shut down signal 112. However, as noted above, the additional costs associated with field installing the exhaust valve 114 may be objectionable in many applications.

Those of ordinary skill in the art will also recognize that while the electro-pneumatic controller 102 shown in FIG. 1 is depicted as having a single output pressure for use with a single-acting type actuator (e.g., the actuator 108), a pneumatic controller having two pressure outputs for use in a dual-acting application could be used as well. For example, one commercially available dual acting electro-pneumatic controller is the DVC6000 series digital valve controller manufactured by Fisher Controls International, Inc. of Marshalltown, Iowa.

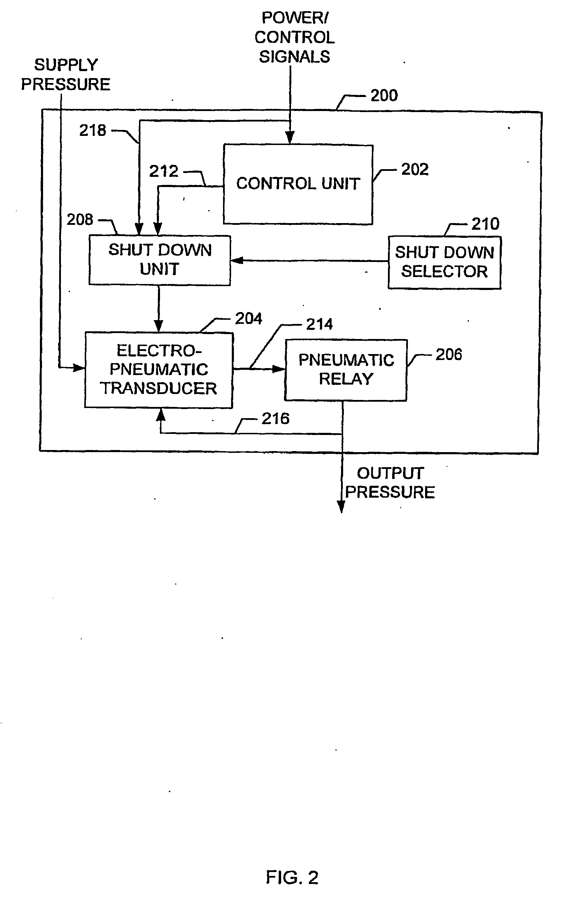

FIG. 2 is a detailed block diagram of an example of an electro-pneumatic controller 200 having an integral shut down apparatus that may be used with the system 100 of FIG. 1 (e.g., in place of the electro-pneumatic controller 102). The example electro-pneumatic controller 200 includes a control unit 202, an electro-pneumatic transducer 204 and a pneumatic relay 206, all of which are generally well-known structures. However, in contrast to known electro-pneumatic controllers 200, the electro-pneumatic controller 200 includes a shut down unit 208 that interposes between the control unit 202 and the electro-pneumatic transducer 204 and further includes a shut down selector 210.

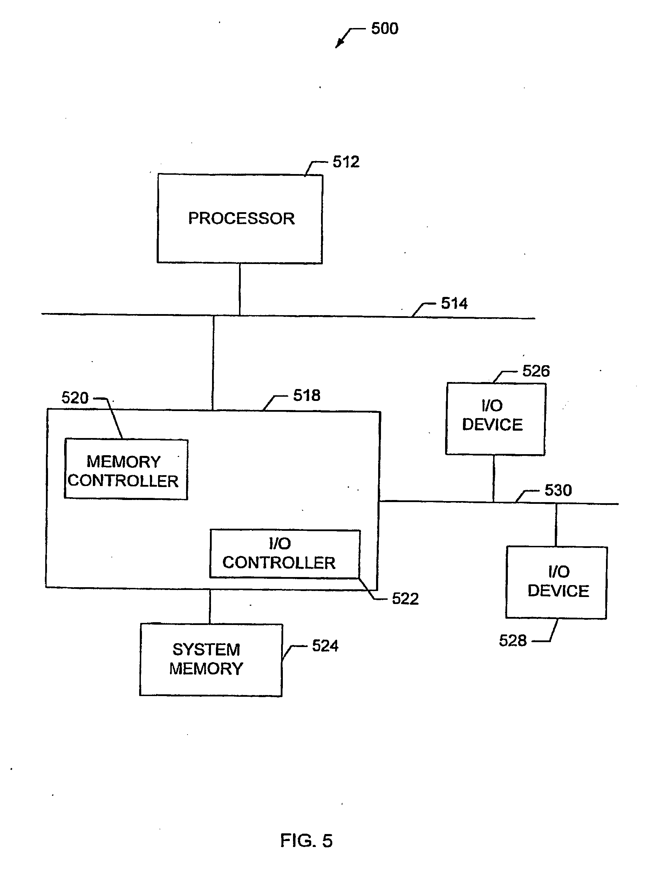

In general, the control unit 202 receives one or more control signals (e.g., a 4-20 mA control signal) from the overall process control or emergency shutdown system to which it is communicatively coupled and provides a control signal 212 to the electro-pneumatic transducer 204 to achieve a desired output pressure and/or a desired control position of the process control device (e.g., the device 106 of FIG. 1) to which it is operatively coupled. The control unit 202 may be implemented using a processor-based system (e.g., the system 500 described below in connection with FIG. 5), discrete digital logic circuits, application specific integrated circuits, analog circuitry, or any combination thereof. In a case where a processor-based system is used to implement the control unit 202, the control unit 202 may execute machine readable instructions, firmware, software, etc. stored on a memory (not shown) within the control unit to perform its control functions.

The electro-pneumatic transducer 204 may be a current-to-pressure type of transducer, in which case the control signal 212 is a current that is varied by the control unit 202 to achieve a desired condition (e.g., position) at the process control device 106 (FIG. 1). Alternatively, the electro-pneumatic transducer 204 may be a voltage-to-pressure type of transducer, in which case the control signal 212 is a voltage that varies to control the process control device 106 (FIG. 1). The pneumatic relay 206 converts a relatively low output capacity (i.e., low flow rate) pressure output 214 into a relatively high capacity output pressure for controlling an actuator (e.g., the actuator 108 of FIG. 1). As depicted in FIG. 2, the electro-pneumatic transducer 204 may receive an output pressure feedback signal 216 to provide a more accurate closed-loop control over the output pressure of the electro-pneumatic controller 200.

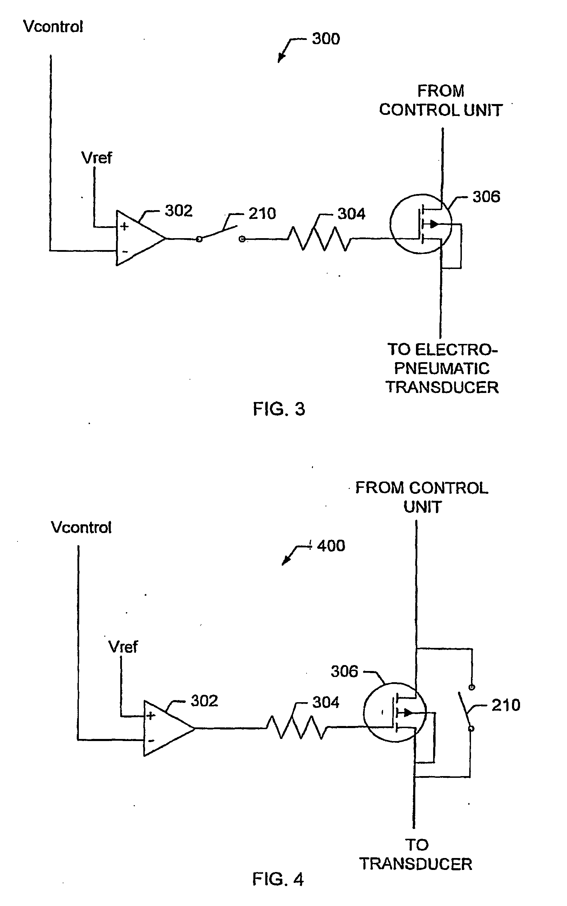

The shut down unit 208 interposes between the control signal 212 and the electro-pneumatic transducer 204 and receives a signal 218 that is at least representative of the control signal input (e.g., the 4-20 mA control or set-point signal input) to the electro-pneumatic controller 200. As described in greater detail below in connection with FIGS. 3 and 4, the shut down selector 210 is operatively coupled to the shut down unit 208 to permit the selective enablement/disablement of the shut down unit 208.

In a case where the shut down selector 210 has been set to disable the shut down unit 208, the control unit 202 receives a set-point or control signal(s) from the process control system to which it is communicatively coupled and outputs the control signal 212 to vary the output pressure 214 of the electro-pneumatic transducer 204 to achieve a desired condition (e.g., a percentage open/closed) at the process control device 106 (FIG. 1). In this case, the shut down unit 208 is completely transparent to the operation of the electro-pneumatic controller 200 and, thus, does not affect the operation of the electro-pneumatic controller 200, regardless of the magnitude of the control signal(s) input to the electro-pneumatic controller 200.

In a case where the shut down selector 210 has been set to enable the operation of the shut down unit 208, the electro-pneumatic controller 200 may vary its output pressure based on the changes in the magnitude of the control signal(s) it receives when the control signal magnitude is above or below a predetermined threshold value. ln other words, the electro-pneumatic controller 200 may operate in the usual manner (i.e., vary its output pressure (e.g., in a proportional manner) in accordance with changes in the control signal(s) it receives. However, when the control signal received by the electro-pneumatic controller 200 crosses the predetermined threshold (e.g., falls below the predetermined threshold value), the shut down unit 208 may interrupt or otherwise prevent the control unit signal 212 from reaching the electro-pneumatic transducer 204. For example the shut down unit 208 may open a circuit path, short a circuit path, apply a predetermined shut down voltage or current, etc. to the electro-pneumatic transducer 204 to cause the electro-pneumatic transducer 204 to drive the pressure 214 and, thus, the output pressure of the controller 200 via the relay 206, to a shut down pressure (e.g., substantially zero pounds per square inch gauge).

ln one particularly useful application, the shut down selector 210 is set to enable the shut down unit 208 and the electro-pneumatic controller 200 is used to control a process control device (e.g., the device 106 of FIG. 1) for use as an emergency shut down device. In particular, in the case where the process control device 106 is an emergency isolation valve and the electro-pneumatic controller 200 is configured to receive a 4-20 mA control signal, under non-emergency conditions a 20 mA signal may be continuously applied to the controller 200 to maintain the valve in a full open condition. The predetermined threshold used by the shut down unit 208 may be set at about 12 mA so that, upon detection of an emergency condition, the process control system (not shown) may reduce the control signal to well below 12 mA (e.g., to 4 mA), thereby causing the shut down unit 208 to prevent the signal 212 from reaching the electro-pneumatic transducer 204. As a result, the output pressure of the electro-pneumatic transducer 204 may be reduce to substantially near zero and, thus, the output pressure of the controller 200 may also be reduced to substantially near zero to close the valve 106.

Above the predetermined threshold (e.g., above 12 mA), when the shut down unit 208 is enabled, the electro-pneumatic transducer 200 is responsive to changes in the control signal so that the output pressure varies in proportion to the change in the control signal. As a result, well-known live reliability tests such as, for example, partial stroke tests can be performed to determine that the controller 200 and the process control device to which it is coupled (e.g., the device 106 of FIG. 1) is operational. In addition, because the shut down unit 208 enables the electro-pneumatic controller 200 to perform a shut down operation without having to remove its source of power (as is the case with many known electro-pneumatic controllers), the control unit 202 may communicate the status (e.g., a successful shut down) of the process device coupled to the controller 200 to the overall process control system. Still further, the integral shut down unit 208 eliminates the costs associated with field mounting an additional safety device (e.g., a solenoid actuated venting valve) to vent the process control device coupled to the controller 200 in response to an emergency condition.

FIGS. 3 and 4 are schematic representations of example circuits 300 and 400 that may be used to implement the shut down unit 208 and shut down selector 210 of FIG. 2. As shown, the circuits 300 and 400 may include a comparator 302, the shut down selector 210, a resistor 304 and an electronic switch 306. The electronic switch 306 is depicted as being a metal oxide semiconductor field effect transistor (MOSFET). However, any other suitable switching device such as, for example, a bipolar junction transistor (BJT), a field effect transistor (FET), an insulated gate bipolar junction transistor (IGBT), an electromechanical relay, or any other suitable switching mechanism could be used instead. Likewise, although the shut down selector 210 is depicted as being a single pole single throw switch, other devices such as, for example, one or more removable wires, jumpers or circuit traces, a header and jumper combination, etc. could be used instead. As can be seen in FIG. 3, a closed condition (e.g., a closed circuit condition) of the shut down selector 210 enables the circuit 300 for shut down operation. In FIG. 4, an open condition of the shut down selector 210 enables the circuit 400 for shut down operation.

As depicted in the example circuits 300 and 400, the non-inverting input of the comparator 302 is coupled to a reference voltage (Vref) and the inverting input is coupled to a voltage (Vcontrol) representative of the control signal provided to the controller 200 via the process control system. The reference voltage Vref is preferably selected so that it corresponds to a desired threshold value of the control signal (e.g., 12 mA as described above in connection with the example of FIG. 2). Thus, in a case where the controller 200 (FIG. 2) is used in an emergency shut down application, the control signal and, thus, Vcontrol, is normally at its highest (or lowest) value. For example, the control signal may be held at 20 mA, in which case Vcontrol will be held at its maximum value, which is greater than Vref. As a result, under non-emergency conditions (with Vcontrol at its maximum value), the output of the comparator 302 is at a logical low condition (e.g., substantially near to or equal to its lower supply voltage, which may be a ground reference). A logical low output by the comparator 302 drives the switch 306 to a conducting condition in which the signal 212 from the control unit 202 is passed to the electro-pneumatic transducer 204.

In an emergency condition, the process control system may reduce the control signal applied to the electro-pneumatic controller 200 to a low or its lowest possible value (e.g., 4 mA), which causes the voltage Vcontrol to fall below the reference voltage Vref. As a result, the output of the comparator 302 transitions to a logical high output (e.g., its highest output voltage) to turn off the electronic switch 306, thereby preventing the signal 212 from being applied to the electro-pneumatic transducer 204.

As is depicted in the examples of FIGS. 3 and 4, the shut down selector 210 may be used in series connection (FIG. 3) with a switching control terminal (e.g., a gate) of the electronic switch 306, may be placed across two terminals (FIG. 4), or in any other suitable configuration to provide the ability to enable/disable the operation of the shut down unit 208.

FIG. 5 is an example processor system 500 that may be used to implement the control unit 202 of FIG. 2. As shown in Fig. 5, the processor system 500 includes a processor 512 that is coupled to an interconnection bus or network 514. The processor 512 may be any suitable processor, processing unit or microprocessor such as, for example, a processor from the Intel Itanium^{Ⓡ} family, Intel X-Scale^{Ⓡ} family, the Intel Pentium^{Ⓡ} family, etc. Although not shown in Fig. 5, the system 500 may be a multi-processor system and, thus, may include one or more additional processors that are identical or similar to the processor 512 and which are coupled to the interconnection bus or network 514.

The processor 512 of Fig. 5 is coupled to a chipset 518, which includes a memory controller 520 and an input/output (I/O) controller 522. As is well known, a chipset typically provides I/O and memory management functions as well as a plurality of general purpose and/or special purpose registers, timers, etc. that are accessible or used by one or more processors coupled to the chipset. The memory controller 520 performs functions that enable the processor 512 (or processors if there are multiple processors) to access a system memory 524, which may include any desired type of volatile memory such as, for example, static random access memory (SRAM), dynamic random access memory (DRAM), etc. The I/O controller 522 performs functions that enable the processor 512 to communicate with peripheral input/output (I/O) devices 526 and 528 via an I/O bus 530. The I/O devices 526 and 528 may be any desired type of I/O device such as, for example, a keyboard or keypad, a video display or monitor, etc. While the memory controller 520 and the I/O controller 522 are depicted in Fig. 5 as separate functional blocks within the chipset 128, the functions performed by these blocks may be integrated within a single semiconductor circuit or may be implemented using two or more separate integrated circuits.

In an example which does not fall under the scope of the claimed invention, an electro-pneumatic controller includes an electro-pneumatic transducer and a shut down unit operatively coupled to the electro-pneumatic transducer. The shut down unit may be configured to respond to a signal received by the electro-pneumatic controller and to cause the electro-pneumatic transducer to provide a pressure output associated with a shut-down condition when the magnitude of the signal crosses a threshold value.

In one example which does not fall under the scope of the claimed invention, a shut down unit for use with an electro-pneumatic controller includes an electronic switch configured to receive a first signal from a control unit of the electro-pneumatic controller and to convey the first signal to an electro-pneumatic transducer of the electro-pneumatic controller. Additionally, the electronic switch is further configured to receive a second signal associated with a control signal input and to cause the electronic switch to prevent the conveyance of the first signal to the electro-pneumatic transducer.

Although certain methods and apparatus have been described herein, the scope of coverage of this patent is not limited thereto. To the contrary, this patent covers all embodiments falling within the scope of the appended claims.

## Claims

1. A shut down unit (208) for use with an electro-pneumatic controller (200), comprising:
a switch (306) configured to receive a first signal (212) from a control unit (202) of the electro-pneumatic controller and to convey the first signal to an electro-pneumatic transducer (204) of the electro-pneumatic controller, wherein the switch is further configured to receive a second signal (218, V control) representative of a control signal input, to determine whether the switch should convey the first signal to the electro-pneumatic transducer,
**characterized in that**
the second signal (218, V control) is input to the control unit (202) and that the determination is performed by comparing the second signal to a predetermined threshold value, and to cause the switch to prevent or allow the conveyance of the first signal to the electro-pneumatic transducer in response to the comparison of the second signal to the threshold value.

2. A shut down unit as defined in claim 1, wherein the switch comprises either a transistor (306) or a relay (210).

3. A shut down unit as defined in claim 2, wherein the transistor includes a gate terminal that is responsive to the second signal.

4. A shut down unit as defined in claim 1, further comprising a comparator (302) configured to compare the second signal to a reference voltage (V ref) and to prevent the conveyance of the first signal to the electro-pneumatic transducer based on the comparison.

5. A shut down unit as defined in claim 1, wherein the second signal is representative of the control signal input indicative of a set-point signal to the electro-pneumatic controller.

6. A shut down unit as defined in claim 1, wherein a shut down selector (210) is configured to selectively enable the operation of the shut down unit.

7. A shut down unit as defined in any one of claims 1, 4 and 5, wherein said shut down unit is operatively coupled to a shut down selector (210) to permit selective enablement/disablement of the shut down unit.

8. A shut down unit as defined in claim 6 or 7, wherein the shut down selector includes a manual switch.

9. An electro-pneumatic controller, comprising:
an electro-pneumatic transducer; and
a shut down unit as defined in claim 1;
the shut down unit configured to respond to the first signal received by the electro-pneumatic controller and to cause the electro-pneumatic transducer to provide a pressure output associated with a shut-down condition when the signal crosses the threshold value.

10. An electro-pneumatic controller as defined in claim 9, wherein the shut down unit includes a comparator configured to compare the signal received by the electro-pneumatic controller to the threshold value and based on the comparison vary a condition of the shut down unit to cause the electro-pneumatic transducer to provide the pressure output associated with the shut-down condition.

11. An electro-pneumatic controller as defined in claim 9, wherein the switch is configured to respond to the second signal provided to the electro-pneumatic controller to cause the electro-pneumatic controller to provide the output pressure associated with the shut-down condition.

12. An electro-pneumatic controller as defined in claim 11, wherein the switch comprises either a transistor (306) or a relay (210).

13. An electro-pneumatic controller as defined in claim 9, wherein the shut down selector includes a manually actuated switch.

## Patentansprüche

1. Abschaltungseinheit (208) zur Verwendung mit einem elektropneumatischen Regler (200), Folgendes umfassend:
einen Schalter (306), der dazu ausgelegt ist, ein erstes Signal (212) von einer Steuereinheit (202) des elektropneumatischen Reglers zu empfangen und das erste Signal an einen elektropneumatischen Wandler (204) des elektropneumatischen Reglers zu übertragen, wobei der Schalter darüber hinaus dazu ausgelegt ist, ein zweites Signal (218, V-Regelung), das für einen Steuersignaleingang steht, zu empfangen, um zu bestimmen, ob der Schalter das erste Signal an den elektropneumatischen Wandler übertragen soll,
**dadurch gekennzeichnet, dass**
das zweite Signal (218, V-Regelung) in die Steuereinheit (202) eingegeben wird, und dass die Bestimmung erfolgt, indem das zweite Signal mit einem vorbestimmten Schwellenwert verglichen wird, und um den Schalter zu veranlassen, die Übertragung des ersten Signals an den elektropneumatischen Wandler im Ansprechen auf den Vergleich des zweiten Signals mit dem Schwellenwert zu verhindern oder zuzulassen.

2. Abschaltungseinheit nach Anspruch 1, wobei der Schalter entweder einen Transistor (306) oder ein Relais (210) umfasst.

3. Abschaltungseinheit nach Anspruch 2, wobei der Transistor einen Gate-Anschluss umfasst, der auf das zweite Signal anspricht.

4. Abschaltungseinheit nach Anspruch 1, darüber hinaus einen Komparator (302) umfassend, der dazu ausgelegt ist, das zweite Signal mit einer Bezugsspannung (Vref) zu vergleichen und die Übertragung des ersten Signals an den elektropneumatischen Wandler auf Grundlage des Vergleichs zu verhindern.

5. Abschaltungseinheit nach Anspruch 1, wobei das zweite Signal für den Steuersignaleingang steht, der ein Sollwertsignal an den elektropneumatischen Regler angibt.

6. Abschaltungseinheit nach Anspruch 1, wobei ein Abschaltungsselektor (210) dazu ausgelegt ist, selektiv den Betrieb der Abschaltungseinheit freizugeben.

7. Abschaltungseinheit nach einem der Ansprüche 1, 4 und 5, wobei die Abschaltungseinheit in Wirkverbindung an einem Abschaltungsselektor (210) angeschlossen ist, um eine selektive Freigabe/Nichtfreigabe der Abschaltungseinheit zu gestatten.

8. Abschaltungseinheit nach Anspruch 6 oder 7, wobei der Abschaltungsselektor einen manuellen Schalter umfasst.

9. Elektropneumatischer Regler, Folgendes umfassend:
einen elektropneumatischen Wandler; und
eine Abschaltungseinheit nach Anspruch 1;
wobei die Abschaltungseinheit dazu ausgelegt ist, auf das erste Signal anzusprechen, das durch den elektropneumatischen Regler empfangen wird, und den elektropneumatischen Wandler dazu zu veranlassen, einen mit einer Abschaltungsbedingung zusammenhängenden Ausgangsdruck bereitzustellen, wenn das Signal den Schwellenwert überschreitet.

10. Elektropneumatischer Regler nach Anspruch 9, wobei die Abschaltungseinheit einen Komparator umfasst, der dazu ausgelegt ist, das durch den elektropneumatischen Regler empfangene Signal mit dem Schwellenwert zu vergleichen und auf Grundlage des Vergleichs eine Bedingung der Abschaltungseinheit zu verändern, um den elektropneumatischen Wandler dazu zu veranlassen, den mit der Abschaltungsbedingung zusammenhängenden Ausgangsdruck bereitzustellen.

11. Elektropneumatischer Regler nach Anspruch 9, wobei der Schalter dazu ausgelegt ist, auf das zweite, dem elektropneumatischen Regler bereitgestellte Signal anzusprechen, um den elektropneumatischen Regler dazu zu veranlassen, den mit der Abschaltungsbedingung zusammenhängenden Ausgangsdruck bereitzustellen.

12. Elektropneumatischer Regler nach Anspruch 11, wobei der Schalter entweder einen Transistor (306) oder ein Relais (210) umfasst.

13. Elektropneumatischer Regler nach Anspruch 9, wobei der Abschaltungsselektor einen manuell betätigten Schalter umfasst.

## Revendications

1. Unité d'arrêt (208) destinée à être utilisée avec une commande électropneumatique (200), comprenant :
un commutateur (306) configuré pour recevoir un premier signal (212) provenant d'une unité de commande (202) de la commande électropneumatique et transporter le premier signal vers un transducteur électropneumatique (204) de la commande électropneumatique, dans laquelle le commutateur est en outre configuré pour recevoir un second signal (218, V control) représentatif d'une entrée de signal de commande, pour déterminer si le commutateur doit transporter le premier signal vers le transducteur électro pneumatique,
**caractérisée en ce que**
le second signal (218, V contrôl) est entré dans l'unité de commande (202) et **en ce que** la détermination est effectuée en comparant le second signal à une valeur de seuil prédéterminée, et pour amener le commutateur à empêcher ou permettre le transport du premier signal vers le transducteur électropneumatique en réponse à la comparaison du second signal avec la valeur de seuil.

2. Unité d'arrêt selon la revendication 1, dans laquelle le commutateur est constitué d'un transistor (306) ou d'un relais (210).

3. Unité d'arrêt selon la revendication 2, dans laquelle le transistor comprend une borne de grille qui est sensible au second signal.

4. Unité d'arrêt selon la revendication 1, comprenant de plus un comparateur (302) configuré pour comparer le second signal à une tension de référence (Vref) et pour empêcher le transport du premier signal vers le transducteur électropneumatique sur la base de la comparaison.

5. Unité d'arrêt selon la revendication 1, dans laquelle le second signal est représentatif de l'entrée de signal de commande indicatrice d'un signal de point de consigne à la commande électro pneumatique.

6. Unité d'arrêt selon la revendication 1, dans laquelle un sélecteur d'arrêt (210) est configuré pour permettre de manière sélective l'actionnement de l'unité d'arrêt.

7. Unité d'arrêt selon l'une quelconque des revendications 1, 4 et 5, dans laquelle l'unité d'arrêt est couplée de manière opérationnelle à un sélecteur d'arrêt (210) pour permettre une activation/désactivation sélective de l'unité d'arrêt.,

8. Unité d'arrêt les revendications 6 ou 7, dans laquelle le sélecteur d'arrêt comprend un commutateur manuel.

9. Commande électropneumatique, comprenant :
un transducteur électro pneumatique ; et
une unité d'arrêt telle que définie dans la revendication 1 ;
l'unité d'arrêt étant configurée pour répondre au premier signal reçu par la commande électropneumatique et pour amener le transducteur électropneumatique à fournir une sortie de pression associée à un état d'arrêt lorsque le signal traverse la valeur de seuil.

10. Commande électropneumatique selon la revendication 9, dans laquelle l'unité d'arrêt comprend un comparateur configuré pour comparer le signal reçu par la commande électropneumatique à la valeur de seuil et sur la base de la comparaison modifier un état de l'unité d'arrêt pour amener le transducteur électropneumatique à fournir la sortie de pression associée à l'état d'arrêt.

11. Commande électropneumatique selon la revendication 9, dans laquelle le commutateur est configuré pour répondre au second signal fourni à la commande électropneumatique pour amener la commande électropneumatique à fournir la pression de sortie associée à l'état d'arrêt.

12. Commande électropneumatique selon la revendication 11, dans laquelle le commutateur comprend un transistor (306) ou un relais (210).

13. Commande électropneumatique selon la revendication 9, dans laquelle le sélecteur d'arrêt comprend un commutateur actionné manuellement.
